# EUROPEAN PATENT APPLICATION

(11) **EP 2 716 371 A1**
(43) Date of publication of application: **09.04.2014**
(21) Application number: 12792324.1
(22) Date of filing: 03.04.2012
(51) Int. Cl.: B05D 5/06, C09D 5/29, C09D 7/12, C09D 201/00

(54) **METHOD FOR MANUFACTURING DESIGN MEDIUM AND DESIGN MEDIUM**

(30) Priority: 27.05.2011 JP 2011118928
(71) Applicant: Kyodo Printing Co., Ltd., Tokyo 112-8501 (JP)
(72) Inventor: FUCHITA, Yasushi, Tokyo 112-8501 (JP); IIZUKA, Hiroyasu, Tokyo 112-8501 (JP)
(74) Representative: Gill, David Alan
(86) International application number: PCT/JP2012/059104
(87) International publication number: WO 2012/165037

(57) **Abstract**

A method for manufacturing a designable medium that allows a single layer to provide a plurality of color tones is provided. A designable medium is manufactured by carrying out an application step of applying coat in which at least two types of luster pigment to be oriented in different directions in a magnetic field are diffused in a resin to a substrate to form a coated film (step S1), an orientation step of applying a magnetic field to a medium in which the coated film is formed on the substrate to orient the luster pigments contained in the coated film (step S2), and a cure step of curing the coated film (step S3).

## Description

### TECHNICAL FIELD

The present invention relates to a designable medium manufacturing method for manufacturing a designable medium that is made designable by applying coat having a luster pigment diffused in a resin onto a substrate and orienting the luster pigment in a magnetic field. The present invention also relates to such a designable medium.

### BACKGROUND ART

In recent years, as a counterfeit-resistant medium, there is a demand for a medium having optical variability that provides different color tones when viewed at different angles.

In related art, to achieve optical variability, an optically variable ink (OVI) containing special film-shaped thin pieces showing different colors when viewed at different angles is used to manufacture a printed medium (see Patent Document 1: National Publication of International Patent Application No. 2007-527329, for example).

Further, a printed medium is manufactured by coating paint mixed with a magnetic pigment on a substrate and applying a magnetic field to orient the magnetic pigment.

The OVI ink and the magnetic pigment, each of which has a special composition, are expensive by themselves, which limits the range of product to which the technologies are applicable.

In view of the fact described above, the present inventors have developed a designable medium that is made designable by applying coat having a luster pigment diffused in a resin onto a substrate and orienting the luster pigment in a magnetic field (see Patent Document 2: Japanese Patent Laid Open Publication No. 2007-54820 and Patent Document 3: Japanese Patent Laid Open Publication No. 2008-142690, for example).

Since a luster pigment is inexpensive, using the technologies described in Patent Documents 2 and 3 allows a designable medium that provides different color tones when viewed at different angles to be produced at low prices. Further, even when a strong magnetic field is applied to orient a luster pigment, the luster pigment is not attracted by the magnetic field or coagulated, but the luster pigment can be uniformly distributed.

### PRIOR ART REFERENCE

### PATENT DOCUMENT

Patent Document 1: National Publication of International Patent Application No. 2007-527329
Patent Document 2: Japanese Patent Laid Open Publication No. 2007-54820
Patent Document 3: Japanese Patent Laid Open Publication No. 2008-142690

### SUMMARY OF THE INVENTION

### PROBLEMS TO BE SOLVED BY THE INVENTION

Patent Documents 2 and 3 described above each disclose a designable medium that provides different color tones when viewed at different angles. Patent Document 3 described above, in particular, discloses that a pigment the orientation of which does not change in a normal environment is changed by preparing paint produced by combining a pigment the orientation of which changes in an intense magnetic field environment with the pigment the orientation of which does not change in a magnetic field environment and applying a magnetic field, and that a plurality of color tones are provided in a single medium by forming coated layers having a plurality of different color tone patterns on the same surface of a substrate.

Patent Documents 2 and 3 described above, however, do not describe that paint in which at least two types of luster pigment to be oriented in different directions in a magnetic field are diffused in a resin is applied onto a substrate to form a single layer on the substrate, and that the single layer provides a plurality of color tones.

The prevent invention has been made in view of the circumstances described above. An object of the present invention is to provide a method for manufacturing a designable medium that allows a single layer to provide a plurality of color tones. Another object of the present invention is to provide the designable medium itself.

### MEANS FOR SOLVING TO THE PROBLEMS

To achieve the objects, the present invention has the following features:

A method for manufacturing a designable medium according to the present invention is characterized in that the method comprises:
an application step of applying coat in which at least two types of luster pigment to be oriented in different directions in a magnetic field are diffused in a resin to a substrate to form a coated film;
an orientation step of applying a magnetic field to a medium in which the coated film is formed on the substrate to orient the luster pigments contained in the coated film; and
a cure step of curing the coated film.

A designable medium according to the present invention is a designable medium comprising: a substrate; and a coated film in which at least two types of luster pigment to be oriented in different directions in a magnetic field are diffused in a resin, the substrate and the coated film being layered on each other, the designable medium characterized in that
the coated film includes the following at least two types of luster pigment: a luster pigment oriented in substantially the same direction as the direction in which the coated film is layered on the substrate; and a luster pigment oriented in a direction substantially perpendicular to the layered direction.

### ADVANTAGEOUS EFFECTS OF THE INVENTION

According to the present invention, a single layer can provide a plurality of color tones.

### BRIEF DESCRIPTION OF THE DRAWINGS

Figure 1 shows an example of the configuration of a designable medium 5 according to the present embodiment;
Figure 2 shows a summary of steps of manufacturing the designable medium 5 according to the present embodiment;
Figure 3 describes the steps of manufacturing the designable medium 5 according to the present embodiment and shows a state in which a magnetic field is applied in the vertical direction;
Figure 4 describes an example of a method for orienting luster pigments contained in the designable medium 5 according to the present embodiment and shows an example of the directions in which the luster pigments are oriented in the magnetic field state in Figure 3(b);
Figure 5 shows a state in which a magnetic field is applied in the horizontal direction;
Figure 6 shows an example of the directions in which the luster pigments are oriented in the magnetic field state in Figure 5;
Figure 7 shows a summary of steps of manufacturing a designable medium 5 according to a second embodiment;
Figure 8 describes the steps of manufacturing the designable medium 5 according to the second embodiment;
Figure 9 shows an example of the configuration of a designable medium 5 according to the second embodiment;
Figure 10 shows measurement results in Example 1 and shows optimum concentrations of two types of luster pigment; and
Figure 11 shows measurement results in Example 2 and shows optimum concentrations of two types of luster pigment.

### DESCRIPTION OF THE EMBODIMENTS

### <Summary of designable medium 5>

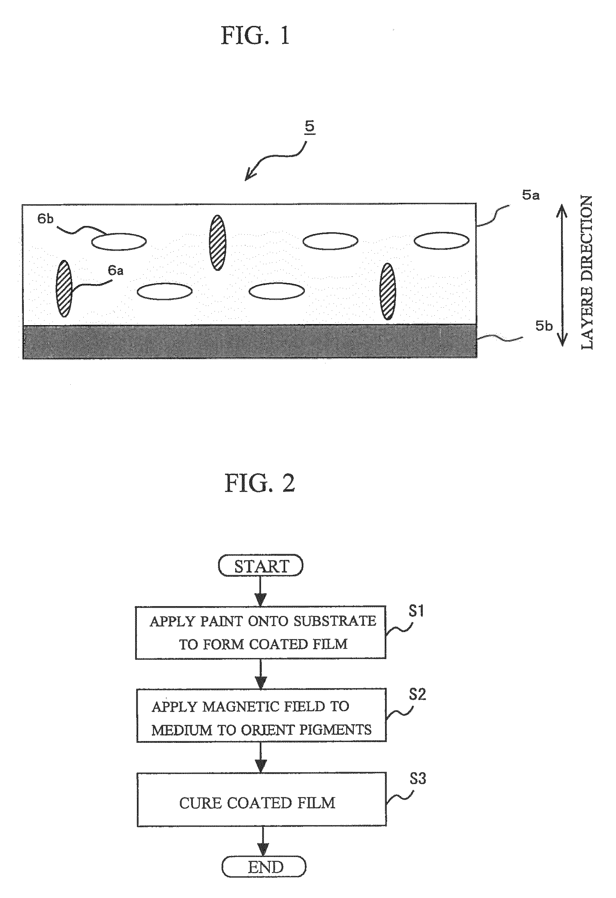

A summary of a designable medium 5 according to the present embodiment will first be described with reference Figures 1 and 2.

The designable medium 5 according to the present embodiment includes a substrate 5b and a coated film 5a in which at least two types of luster pigment to be oriented in different directions in a magnetic field are diffused in a resin, and the coated film 5a is layered on the substrate 5b, as shown in Figure 1.

The coated film 5a, which forms the designable medium 5 according to the present embodiment, includes at least two luster pigments 6a and 6b, the luster pigment 6a oriented in substantially the same direction as the direction in which the coated film 5a is layered on the substrate 5b and the luster pigment 6b oriented in a direction substantially perpendicular to the layered direction.

The designable medium 5 shown in Figure 1 according to the present embodiment is manufactured by using a method including an application step of applying coat in which the at least two luster pigments 6a and 6b to be oriented in different directions in a magnetic field are diffused in a resin onto the substrate 5b to form the coated film 5a (step S1), an orientation step of applying a magnetic field to the designable medium 5 in which the coated film 5a is formed on the substrate 5b to orient the luster pigments 6a and 6b contained in the coated film 5a (step S2), and a curing step of curing the coated film 5a (step S3), as shown in Figure 2.

Since the coated film 5a, which forms the designable medium 5 according to the present embodiment, includes the at least two luster pigments 6a and 6b, the luster pigment 6a oriented in substantially the same direction as the direction in which the coated film 5a is layered on the substrate 5b and the luster pigment 6b oriented in a direction substantially perpendicular to the layered direction, the single layer 5a can provide a plurality of color tones. The designable medium 5 according to the present embodiment will be described below in detail with reference to the accompanying drawings.

### (First Embodiment)

### <Example of configuration of designable medium 5 according to the present embodiment>

An example of the configuration of the designable medium 5 according to the present embodiment will first be described with reference to Figure 1.

The designable medium 5 according to the present embodiment includes the substrate 5b and the coated film 5a.

The substrate 5b is made of resin, paper, ceramic, or any other non-magnetic material. The substrate 5b may instead be made of plastic, film-like material, glass, or any other transparent material. The layer thickness of the substrate 5b is not limited to a specific value and can be an arbitrary value.

The coated film 5a is formed by applying coat on one surface of the substrate 5b. The paint that forms the coated film 5a is a paint in which at least two luster pigments made of a base material, such as mica, alumina, silica, or any other flake material, and coated with a titanium oxide, an iron oxide, or any other high refractive index metal oxide are uniformly diffused in a no-solvent, low-viscosity curable resin. The flake material preferably has a scale-like shape and a size ranging from 1 to 100 µm. The no-solvent, low-viscosity curable resin may, for example, be an ultraviolet curing resin or a heat curing resin. The layer thickness of the coated film 5a is not limited to a specific value and can be any value that prevents the luster pigments from being exposed through the surface of the coated film 5a.

The paint that forms the coated film 5a according to the present embodiment contains at least two luster pigments to be oriented in different directions in a magnetic field. Specifically, the at least two luster pigments are formed of a luster pigment oriented in the magnetic field in a direction substantially perpendicular to the magnetic fluxes and a luster pigment oriented in the magnetic field in a direction substantially parallel to the magnetic fluxes.

In the designable medium 5 according to the present embodiment, paint in which the at least two luster pigments to be oriented in different directions in a magnetic field described above are diffused in the no-solvent, low-viscosity curable resin, and the paint is applied onto the substrate 5b to form the single coated film 5a on the substrate 5b. A magnetic field is applied to the coated film 5a formed on the substrate 5b to orient the luster pigments contained in the coated film 5a. The coated film 5a in which the luster pigments are oriented is then cured. The designable medium 5 including the luster pigment 6a, which is oriented in substantially the same direction as the direction in which the coated film 5a is layered on the substrate 5b, and the luster pigment 6b, which is oriented in a direction substantially perpendicular to the layered direction, can thus be produced, as shown in Figure 1.

### <Method for manufacturing designable medium 5>

A method for manufacturing the designable medium 5 according to the present embodiment will next be described with reference to Figures 2 to 4.

The manufacture of the designable medium 5 according to the present embodiment is broadly divided into the following three steps as shown in Figure 2: the application step (step S1); the orientation step (step S2); and the cure step (step S3).

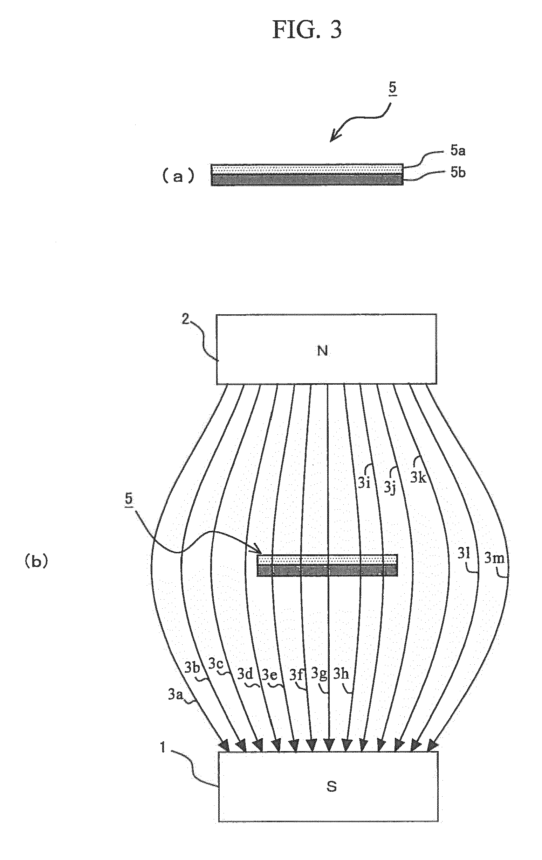

The application step (step S1) is a step of applying coat in which the at least two luster pigments to be oriented in different directions in a magnetic field described above are diffused in a no-solvent, low-viscosity curable resin onto the substrate 5b to form the coated film 5a on the substrate 5b. The designable medium 5, in which the coated film 5a is formed on the substrate 5b, is thus produced, as shown in Figure 3(a).

Figure 3(a) diagrammatically shows a side surface of the designable medium 5 formed in the application step (step S1). In the designable medium 5 according to the present embodiment, the single coated film 5a is formed on the substrate 5b by applying the paint on one surface of the substrate 5b, as shown in Figure 3(a).

The orientation step (step S2) is a step of applying a magnetic field to the designable medium 5 produced in the application step (step S1) to orient the luster pigments contained in the coated film 5a. Since the coated film 5a according to the present embodiment contains at least two luster pigments, a luster pigment to be oriented in a magnetic field in a direction substantially perpendicular to the magnetic fluxes and a luster pigment to be oriented in the magnetic field in a direction substantially parallel to the magnetic fluxes, applying a magnetic field to the designable medium 5 allows formation of the luster pigment 6a oriented in substantially the same direction as the direction in which the coated film 5a is layered on the substrate 5b and the luster pigment 6b oriented in a direction substantially perpendicular to the layered direction in the coated film 5a, as shown in Figure 1. The strength of the magnetic field applied to the designable medium 5 is 0.3 T (tesla) or higher, preferably 1.0 T or higher. Increasing the strength of the magnetic field improves the orientation speed.

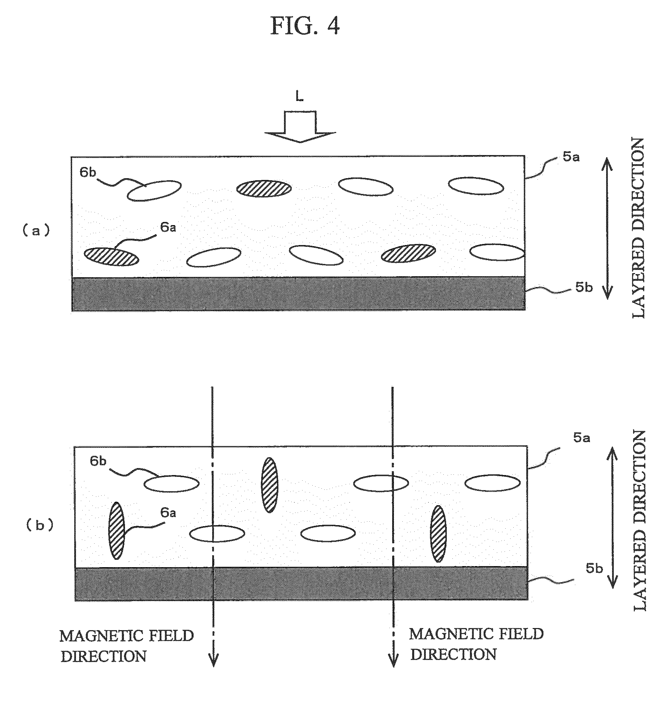

The luster pigments 6a and 6b before the application of the magnetic field to the designable medium 5 (after application step but before orientation step) shown in Figure 3(a) are oriented substantially in the horizontal direction (substantially horizontal state), as shown in Figure 4(a). In the substantially horizontal state, when incident light L is incident on the surface of the designable medium 5 as shown in Figure 4(a), an interference color or luster appears on the surface of the designable medium 5 in a range from about 0° to 150°. Irrespective of whether each of the luster pigments 6a and 6b has positive (+) or negative (-) anisotropic magnetic susceptibility, each of the luster pigments 6a and 6b is stable in terms of energy when having an elliptical or scale-like shape as shown in Figure 4, whereby the major axis of each of the luster pigments 6a and 6b is substantially parallel to the substrate 5b.

Most particles that are anisotropic in a crystalline structure are also magnetically anisotropic. For example, consider now a particle having a large aspect ratio. The magnetic susceptibility along the major axis (1) differs from the magnetic susceptibility along a minor axis (s) perpendicular to the major axis (1), and the anisotropic magnetic susceptibility can be expressed by the difference in the magnetic susceptibility between the major axis (1) and the minor axis (s) (Δχa=χl-χs).

When the anisotropic magnetic susceptibility Δχa is smaller than 0, a luster pigment particle is stable in terms of energy when the major axis (1) thereof is perpendicular to the magnetic field direction. Applying a magnetic field to the luster pigment therefore orients the luster pigment in such a way that the major axis (1) of the pigment is perpendicular to the magnetic field direction.

On the other hand, when the anisotropic magnetic susceptibility Δχa is greater than 0, a luster pigment particle is stable in terms of energy when the major axis (1) thereof is parallel to the magnetic field direction. Applying a magnetic field to the luster pigment therefore orients the luster pigment in such a way that the major axis (1) of the pigment is parallel to the magnetic field direction.

In the present embodiment, a magnetic field is applied to the designable medium 5 shown in Figure 3(a) by using an apparatus shown in Figure 3(b). As a result, the luster pigment 6a, which is oriented in substantially the same direction as the direction in which the coated film 5a is layered on the substrate 5b, and the luster pigment 6b, which is oriented in a direction substantially perpendicular to the layered direction, are formed in the coated film 5a, as shown in Figure 4(b).

Figure 3(b) diagrammatically shows a magnetic field generator used to carry out the orientation step (step S2). The magnetic field generator shown in Figure 3(b) includes magnetized yokes 1 and 2, each of which is an electromagnet. Each of the magnetized yokes 1 (south pole) and 2 (north pole) has a portion (not show) around which a coil is wound, and the magnetized yokes 1 and 2 can form a magnetic field between the magnetized yokes 1 and 2 by generating a plurality of magnetic fluxes 3a, 3b, 3c, ..., 3m. The magnetic fluxes 3a to 3m have linear portions (or substantially linear portions) and curved portions, as shown in Figure 3(b). The strength of the magnetic field is set at 0.3 T (tesla) or higher, preferably 1.0 T or higher. The designable medium 5 is placed in the magnetic field (plurality of magnetic fluxes 3a to 3m) formed between the magnetized yokes 1 and 2 as shown in Figure 3(b), and the applied magnetic field orients the luster pigments 6a and 6b contained in the coated film 5a. The luster pigment 6a oriented in substantially the same direction as the layered direction and the luster pigment 6b oriented in a direction substantially perpendicular to the layered direction are thus formed in the coated film 5a, as shown in Figure 4(b).

When the designable medium 5 is placed in the magnetic field in such a way that the designable medium 5 is perpendicular to the linear portions (or substantially linear portions) of the magnetic fluxes 3e to 3i (longitudinal magnetic field, vertical magnetic field) as shown in Figure 3(b), the luster pigment 6b having negative (-) anisotropic magnetic susceptibility changes its orientation from the substantially horizontal state shown in Figure 4(a) to a uniformly horizontal state shown in Figure 4(b), whereby the luster pigment 6b oriented in a direction substantially perpendicular to the layered direction is formed in the coated film 5a. Examples of the luster pigment 6b having negative (-) anisotropic magnetic susceptibility may include Iriodin302, Iriodin522, Iriodin524, Color Code, and Xirallic T60-21.

On the other hand, the luster pigment 6a having positive (+) anisotropic magnetic susceptibility changes its orientation from the substantially horizontal state shown in Figure 4(a) to a vertical state shown in Figure 4(b), whereby the luster pigment 6a oriented in substantially the same direction as the layered direction is formed in the coated film 5a. Examples of the luster pigment 6a having positive (+) anisotropic magnetic susceptibility may include XirallicT60-23, XirallicT60-24, and Infinite R-08.

The luster pigment 6a oriented in substantially the same direction as the layered direction and the luster pigment 6b oriented in a direction substantially perpendicular to the layered direction can thus be formed in the coated film 5a.

The cure step (step S3) is a step of curing the coated film 5a. Since the luster pigment 6a oriented in substantially the same direction as the layered direction and the luster pigment 6b oriented in a direction substantially perpendicular to the layered direction are formed in the coated film 5a in the orientation step (step S2) described above as shown in Figure 4(b), curing the coated film 5a in the orientation state described above can provide the designable medium 5 including the luster pigment 6a oriented in substantially the same direction as the layered direction and the luster pigment 6b oriented in a direction substantially perpendicular to the layered direction.

To cure the coated film 5a, a curing method according to the no-solvent, low-viscosity curable resin that form the coated film 5a is used. For example, when the no-solvent, low-viscosity curable resin is an ultraviolet resin, the coated film 5a can be cured by irradiating the coated film 5a with ultraviolet light. When the no-solvent, low-viscosity curable resin is a heat curing resin, the coated film 5a can be cured by heating the coated film 5a. The coated film 5a can thus be cured by using an optimum method according to the no-solvent, low-viscosity curable resin that forms the coated film 5a.

It is preferable to cure the coated film 5a with a magnetic field applied to the designable medium 5. In this case, the coated film 5a can be cured with the luster pigment 6a oriented in substantially the same direction as the layered direction and the luster pigment 6b oriented in a direction substantially perpendicular to the layered direction formed in the coated film 5a as shown in Figure 4(b). To this end, the no-solvent, low-viscosity curable resin is preferably an ultraviolet resin. The coated film 5a can thus be irradiated with ultraviolet light and cured with a magnetic field applied to the designable medium 5.

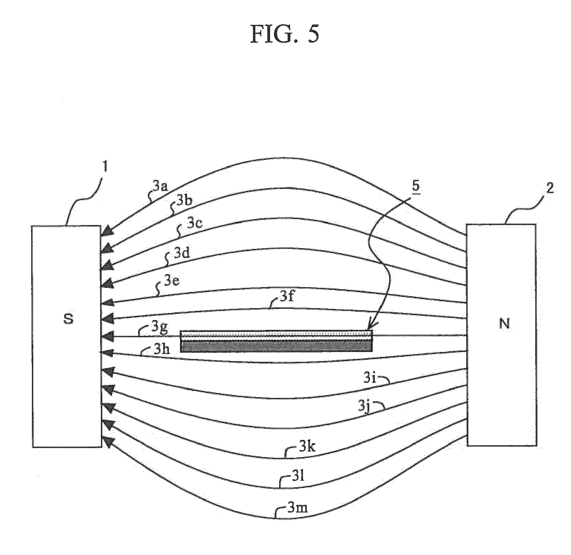

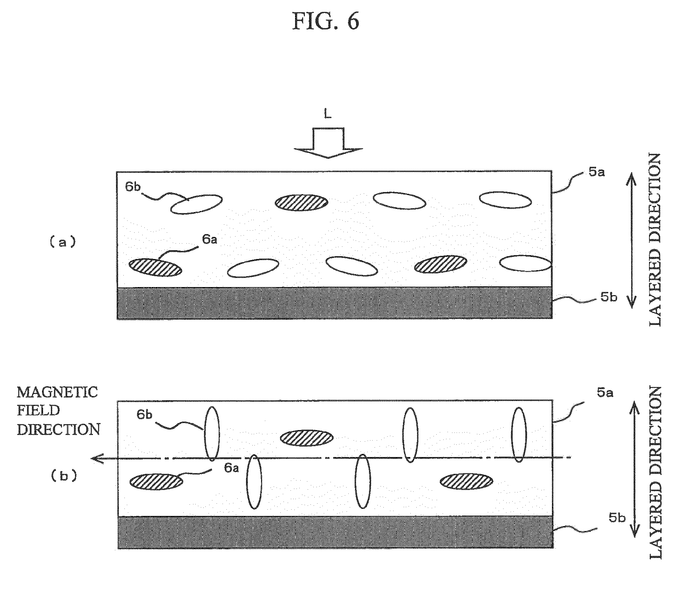

In the embodiment described above, the designable medium 5 is placed in the magnetic field (plurality of magnetic fluxes 3e to 3i) formed between the magnetized yokes 1 and 2 as shown in Figure 3(b), and the applied magnetic field orients the luster pigments 6a and 6b contained in the coated film 5a to form the luster pigment 6a oriented in substantially the same direction as the layered direction and the luster pigment 6b oriented in a direction substantially perpendicular to the layered direction in the coated film 5a as shown in Figure 4(b). On the other hand, the following formation is also possible: the designable medium 5 is placed in the magnetic field (magnetic flux 3g) formed between the magnetized yokes 1 and 2 as shown in Figure 5, and the applied magnetic field orients the luster pigments 6a and 6b contained in the coated film 5a to form the luster pigment 6b oriented in substantially the same direction as the layered direction and the luster pigment 6a oriented in a direction substantially perpendicular to the layered direction in the coated film 5a as shown in Figure 6(b).

When the designable medium 5 is so placed that it is horizontal with respect to the linear portion (or substantially linear portion) of the magnetic flux 3g (lateral magnetic field, horizontal magnetic field) as shown in Figure 5, the luster pigment 6b having negative (-) anisotropic magnetic susceptibility changes its orientation from a substantially horizontal state shown in Figure 6(a) to a vertical state shown in Figure 6(b), and the luster pigment 6b oriented in substantially the same direction as the layered direction is formed in the coated film 5a.

On the other hand, the luster pigment 6a having positive (+) anisotropic magnetic susceptibility changes its orientation from the substantially horizontal state shown in Figure 6(a) to a uniformly horizontal state shown in Figure 6(b), and the luster pigment 6a oriented in a direction substantially perpendicular to the layered direction is formed in the coated film 5a.

As a result, the luster pigment 6b oriented in substantially the same direction as the layered direction and the luster pigment 6a oriented in a direction substantially perpendicular to the layered direction can be formed in the coated film 5a.

### <Effect and advantage of designable medium 5 according to present embodiment>

As described above, in the present embodiment, placing the designable medium 5 in the linear portions (or substantially linear portions) of the magnetic fluxes and applying a magnetic field (longitudinal magnetic field, vertical magnetic field) to the designable medium 5 as shown in Figure 3(b) allows formation of the designable medium 5 including the luster pigment 6a oriented in substantially the same direction as the layered direction and the luster pigment 6b oriented in a direction substantially perpendicular to the layered direction as shown in Figure 4(b). Further, placing the designable medium 5 in the linear portion (or substantially linear portion) of a magnetic flux and applying a magnetic field (lateral magnetic field, horizontal magnetic field) to the designable medium 5 as shown in Figure 5 allows formation of the designable medium 5 including the luster pigment 6b oriented in substantially the same direction as the layered direction and the luster pigment 6a oriented in a direction substantially perpendicular to the layered direction as shown in Figure 6(b). As a result, when the designable medium 5 is manufactured by using at least two luster pigments to be oriented in different directions in a magnetic field, the resultant designable medium 5 provides different color tones when viewed at different angles. Further, the single coated film 5a can provide a plurality of color tones.

In the embodiment described above, a luster pigment having anisotropic magnetic susceptibility is oriented in a direction substantially perpendicular to the layered direction in the coated film 5a. It is, however, also possible to orient a luster pigment having no anisotropic magnetic susceptibility in a direction substantially perpendicular to the layered direction in the coated film 5a. In this case, when paint containing the luster pigment is applied onto the substrate 5b, the luster pigment is automatically oriented in a direction substantially perpendicular to the layered direction.

### (Second Embodiment)

A second embodiment will next be described.

In the first embodiment, a magnetic field is applied to the designable medium 5 in which the coated film 5a is formed on the substrate 5b to orient the luster pigments 6a and 6b contained in the coated film 5a, as shown in Figure 3(b).

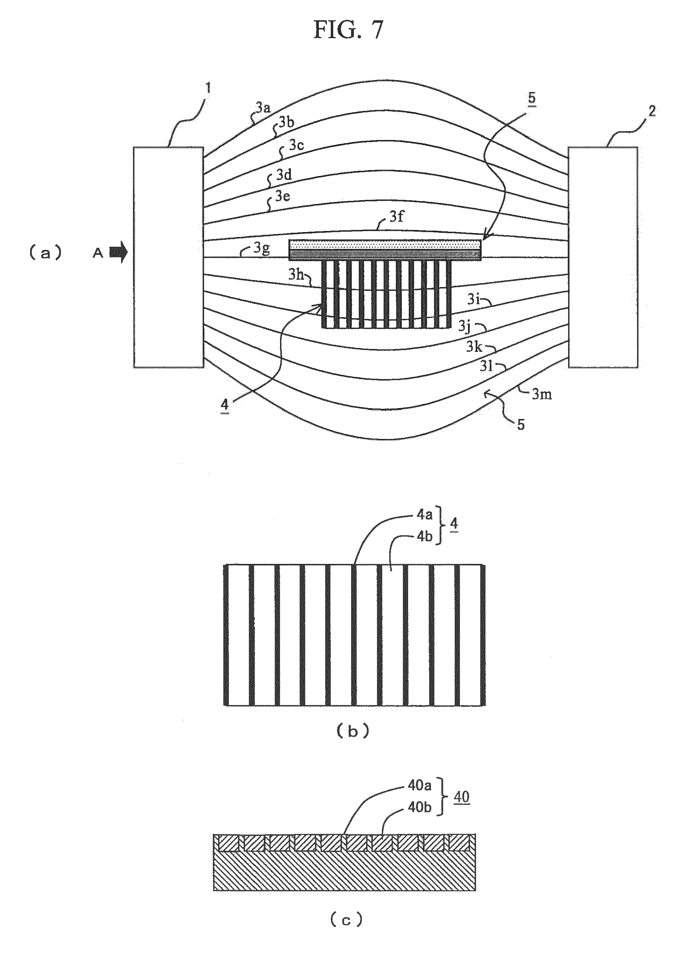

In the second embodiment, a magnetic field is applied to the designable medium 5 in which the coated film 5a is formed on the substrate 5b with a magnetic member 4 made of a ferromagnetic material or a paint containing a ferromagnetic material adjacent to the designable medium 5 as shown in Figure 7(a) to orient the luster pigments 6a and 6b contained in the coated film 5a. In this case, pigment orientation is performed differently in the portion of the designable medium 5 to which the magnetic member 4 is adjacent and in the portion of the designable medium 5 to which no magnetic member 4 is adjacent, whereby a predetermined pattern is formed in each portion of the coated film 5a. As a result, the contrast and the color tone provided by a portion of the coated film 5a can be different from those provided by another portion of the coated film 5a. The second embodiment will be described below with reference to Figures 7 to 9.

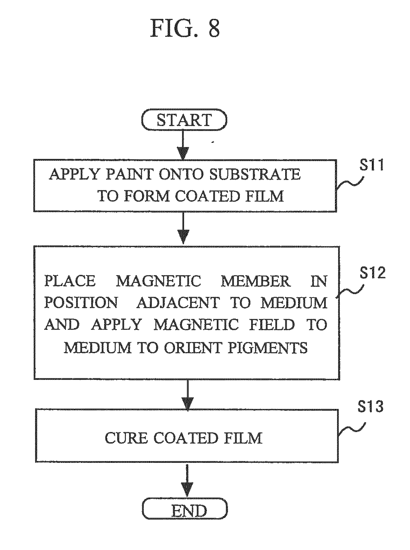

The manufacture of the designable medium 5 according to the second embodiment is broadly divided into the following three steps as shown in Figure 8: the application step (step S11); the orientation step (step S12); and the cure step (step S13), and the orientation step (step S12) differs from that in the first embodiment. The orientation step (step S12) in the present embodiment will be described below in detail.

In the orientation step (step S12), the magnetic member 4 is placed in the position of the linear magnetic flux 3g among the magnetic fluxes 3a to 3m, and a magnetic field is applied with the designable medium 5 placed on the magnetic member 4, as shown in Figure 7(a). It is assumed in Figure 7(a) that the magnetic member 4 is supported by a non-magnetic member (not shown), for example, support member made of a ceramic. Further, the strength of the magnetic field formed in Figure 7(a) is 0.3 T (tesla) or higher, preferably 1.0 T or higher.

The magnetic member 4 shown in Figure 7(a) has a ferromagnetic material area 4a formed in a desired pattern (11 lines parallel to each other in Figure 7(b)) at least on one side (upper side in Figure 7(b)) and a non-ferromagnetic material area (made of magnetic material other than ferromagnetic material, for example, diamagnetic material, paramagnet material, or feebly-magnetic material) 4b formed adjacent to the ferromagnetic material area 4a, as shown in Figure 7(b). The magnetic member 4 may, for example, be a laminate produced by alternately laminating a band-shaped member made of a ferromagnetic material and a band-shaped member made of a non-ferromagnetic material. The magnetic member 4 can be readily manufactured by alternately laminating a ferromagnetic material and a non-ferromagnetic material. Further, a smaller thickness of each of the band-shaped members allows a finer pattern to be produced. The ferromagnetic material may, for example, be iron, nickel, or cobalt, and the diamagnetic material may, for example, be aluminum or copper. The magnetic member 4 in the present embodiment is produced by alternately laminating a ferromagnetic material having a thickness of 0.3 mm (eleven in total) and a non-ferromagnetic material having a thickness of 0.3 mm (ten in total), as shown in Figure 7(b). The magnetic member 4 may instead be, for example, a member made of a ferromagnetic material and having irregularities thereon because air is a non-magnetic material.

Figure 7(c) shows the configuration of a magnetic member 40, which is a variation of the magnetic member 4 described above. The magnetic member 40 is produced by using a photolithography technology to etch a plate-shaped member 40a made of a ferromagnetic material in such a way that a pattern is left on the plate-shaped member 40a and filling the resultant grooves with a non-ferromagnetic material 40b.

In the orientation step (S12) in the present embodiment, the coated film 5a is cured with a magnetic field applied to the designable medium 5.

In the thus processed designable medium 5 according to the present embodiment, the parallel-line-shaped pattern of the magnetic member 4 is transferred to a surface of the designable medium 5, whereby a pattern having the same shape as that of the transferred pattern is formed.

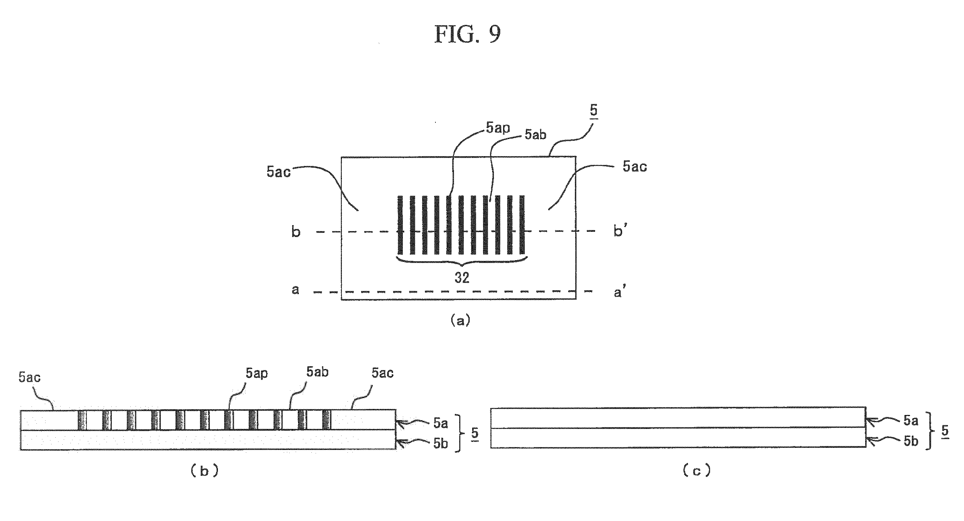

A description will now be made of the designable medium 5 formed by applying a magnetic field thereto in the position indicated by the arrow A in Figure 7(a). Figure 9(a) shows a surface of the designable medium 5 according to the present embodiment. Figure 9(b) is a side cross-sectional view taken along the line a-a' in Figure 9(a). Figure 9(c) is a side cross-sectional view taken along the line b-b' in Figure 9(a).

The designable medium 5 according to the present embodiment has a pattern 32 formed by using the magnetic member 4 described above and formed of the 11 lines parallel to each other in a central portion of the surface of the designable medium 5 (reference character 5ac denotes a peripheral portion other than the pattern 32), as shown in Figure 9(a). The pattern 32 is formed of 11 linear portions 5ap and interline portions 5ab.

A description will now be made of the pigment orientation in the designable medium 5 formed by applying a magnetic field thereto in the position indicated by the arrow A shown in Figure 7(a). When the designable medium 5 is cut along the lines a-a' and b-b' shown in Figure 9(a) and viewed, the side cross-sectional views shown in Figures 9(b) and 9(c) are obtained respectively.

In the coated film 5a in Figure 9(c), in the areas 5ab corresponding to the non-ferromagnetic material areas 4b of the magnetic member 4 and the area 5ac corresponding to the portion that is not in contact with the magnetic member 4 (air: non-magnetic material), the magnetic field produced by the magnetized yokes 1 (south pole) and 2 (north pole) (lateral magnetic field, horizontal magnetic field) forms the luster pigment 6b oriented in substantially the same direction as the layered direction and the luster pigment 6a oriented in a direction substantially perpendicular to the layered direction, as shown in Figure 6(b).

On the other hand, in the coated film 5a in Figure 9(b), in the areas corresponding to the ferromagnetic material areas 5ap of the magnetic member 4, the magnetic field via the ferromagnetic material areas 4a (longitudinal magnetic field, vertical magnetic field) forms the luster pigment 6a oriented in substantially the same direction as the layered direction and the luster pigment 6b oriented in a direction substantially perpendicular to the layered direction, as shown in Figure 4(b).

In the designable medium 5 according to the present embodiment, pigment orientation is therefore performed differently in the portion of the designable medium 5 to which the magnetic member 4 is adjacent and in the portion of the designable medium 5 to which no magnetic member 4 is adjacent, whereby a predetermined pattern is formed in each portion of the coated film 5a. As a result, the contrast and the color tone provided by a portion of the coated film 5a can be different from those provided by another portion of the coated film 5a.

In the above embodiment, a description has been made of the designable medium 5 produced in the orientation process under the influence of the magnetic field created when the 11 parallel lines (ferromagnetic material areas 4a of magnetic member 4 shown in Figures 7(a) and 7(b)) are used as a pattern formed on the designable medium 5 (pattern of magnetic member 4). The pattern is, however, not limited to the pattern described above and can be a curved line, a circle, an ellipse, an oval, a polygon, a character, a symbol, or a combination thereof. The magnetic fluxes produced when a magnetic field is applied change in accordance with the pattern, and the orientation of the luster pigments changes accordingly. Using a variety of patterns for specific purposes achieves desired pigment orientation.

### <Effect and advantage of designable medium 5 according to present embodiment>

As described above, in the designable medium 5 according to the present embodiment, a magnetic field is applied to the designable medium 5 in which the coated film 5a is formed on the substrate 5b with the magnetic member 4 made of a ferromagnetic material or paint containing a ferromagnetic material adjacent to the designable medium 5 as shown in Figure 7(a) to orient the luster pigments 6a and 6b contained in the coated film 5a. In this case, pigment orientation is performed differently in the portion of the coated film 5a to which the magnetic member 4 is adjacent and in the portion of the coated film 5a to which no magnetic member 4 is adjacent, whereby a predetermined pattern is formed in each portion of the coated film 5a. As a result, the contrast and the color tone provided by a portion of the coated film 5a can be different from those provided by another portion of the coated film 5a.

### EXAMPLES

Examples of the embodiments described above will next be described. It is, however, noted that the following Examples are those based on the technical spirit of the present invention and that the present invention is not limited to the following Examples.

### (Example 1)

### <Exemplary method 1 for manufacturing designable medium 5>

First, two types of luster pigment (Iriodin522 and XirallicT60-24) were added to a no-solvent, low-viscosity curable resin (UV Flexographic ink (manufactured by T&K TOKA Corporation, viscosity: 170 mPa·s)) to produce coat by using an ink agitator (manufactured by KURABO Industries Ltd., model: KK-100).

Iriodin522 was used as the luster pigment 6b having negative (-) anisotropic magnetic susceptibility, and XirallicT60-24 was used as the luster pigment 6a having positive (+) anisotropic magnetic susceptibility. The mixture ratio between the luster pigment 6b having negative (-) anisotropic magnetic susceptibility and the luster pigment 6a having positive (+) anisotropic magnetic susceptibility was set at Iriodin522 : XirallicT60-24 = 3:7.

The paint was then applied onto the substrate (easy-adhesion PET (manufacture by TORAY Industries, Inc., Lumirror U426)) 5b having a thickness of 100 µm by using a wire bar (#20) to produce the coated film 5a on the substrate 5b.

The designable medium 5 was then placed in a magnetic field generator (manufacture by Sumitomo Heavy Industries, Inc., model: HF5-100VT-50HT) installed horizontally, such as that shown in Figure 5, and a magnetic field (lateral magnetic field, horizontal magnetic field) of 0.5 T was applied to the designable medium 5 to orient the two types of luster pigment.

With the magnetic field of 0.5 T applied, the designable medium 5 was irradiated with ultraviolet light so that the coated film 5a was cured. The designable medium 5 was thus produced.

In the manufacturing method described above, the designable medium 5 was produced by changing the concentration of the two luster pigments in the paint from 0.5% to 25.0%. The thus produced designable media 5 were visually evaluated in terms of color tone. With the entire paint (two types of luster pigment + no-solvent, low-viscosity curable resin) being a reference having a value of 1, the proportion of the two luster pigments contained in the paint was derived as the concentration of the two luster pigments.

Further, a hue angle of the designable medium 5 produced in the manufacturing method described above with application of no magnetic field (hue angle h_{ab} with no magnetic field applied) and a hue angle of the designable medium 5 produced in the manufacturing method described above with application of a magnetic field (hue angle h_{ab} with magnetic field applied) were measured, and the difference between the measurements (h_{ab} difference) was determined. The hue angles were measured with a spectrophotometric colorimetry spectrometer (model: GCMS-3B, manufactured by Murakami Color Research Laboratory).

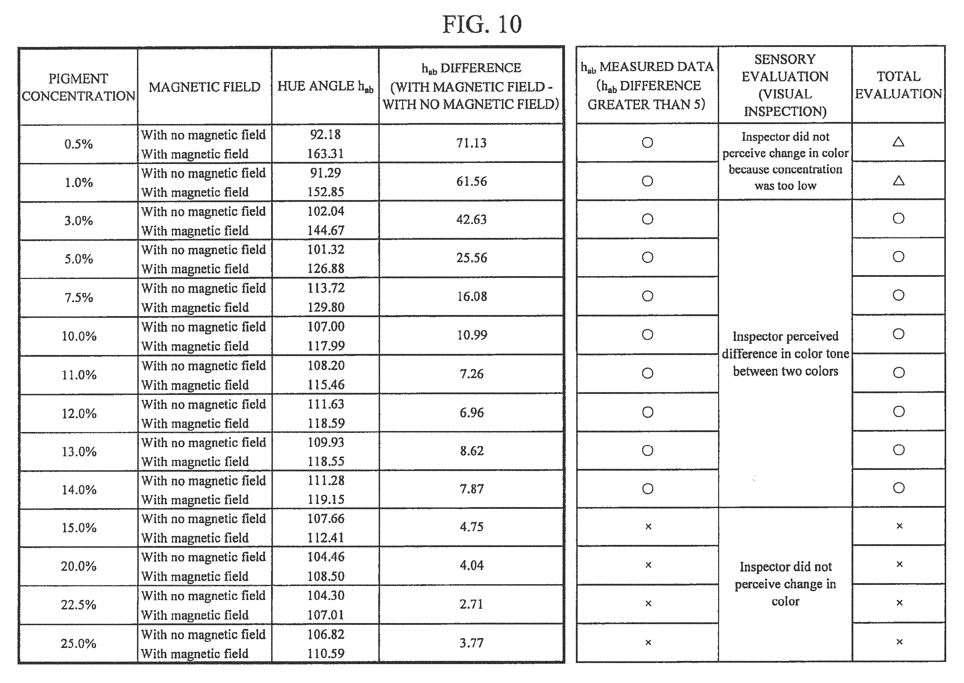

Figure 10 shows results of the visual evaluation (sensory evaluation) of the color tone of the designable media 5 and the difference in the hue angle (h_{ab} difference).

As clearly indicated by the measurement results shown in Figure 10, when the concentration of the two luster pigments was 1.0% or lower, comparison between a designable medium produced with application of no magnetic field and a designable medium produced with application of a magnetic field did not allow an inspector to perceive a difference in color change because the concentration of the luster pigments is low (Δ).

When the concentration of the two luster pigments ranged from 3.0% to 14.0%, comparison between a designable medium produced with application of no magnetic field and a designable medium produced with application of a magnetic field allowed the inspector to perceive that the designable medium produced with application of no magnetic field provided no difference in color tone between two colors, whereas the designable medium produced with application of a magnetic field provided a difference in color tone between two colors (○).

Further, when the concentration of the two luster pigments was 15.0% or higher, comparison between a designable medium produced with application of no magnetic field and a designable medium produced with application of a magnetic field did not allow the inspector to perceive a difference in color change because the two designable media had no difference in color tone between two colors (×).

In the designable media 5 produced with application of a magnetic field (lateral magnetic field, horizontal magnetic field) in the manufacturing method described above, the luster pigment 6b having negative (-) anisotropic magnetic susceptibility (Iriodin522) changes its orientation from the substantially horizontal state shown in Figure 6(a) to the vertical state shown in Figure 6(b), and the luster pigment 6b oriented in substantially the same direction as the layered direction is formed in the coated film 5a. On the other hand, the luster pigment 6a having positive (+) anisotropic magnetic susceptibility (XirallicT60-24) changes its orientation from the substantially horizontal state shown in Figure 6(a) to the uniformly horizontal state shown in Figure 6(b), and the luster pigment 6a oriented in a direction substantially perpendicular to the layered direction is formed in the coated film 5a.

When the concentration of the two luster pigments is low (1.0% or lower), the luster pigment 6b having negative (-) anisotropic magnetic susceptibility (Iriodin522) tends to change its orientation from the substantially horizontal state shown in Figure 6(a) to the vertical state shown in Figure 6(b) because the amount of luster pigments contained in the coated film 5a is small. As a result, the difference in the hue angle (h_{ab} difference) is large, as shown in Figure 10. However, since the concentration of the luster pigments was low, comparison between a designable medium produced with application of no magnetic field and a designable medium produced with application of a magnetic field did not allow the inspector to perceive a difference in color change.

When the concentration of the two luster pigments is high (15.0% or higher), the luster pigment 6b having negative (-) anisotropic magnetic susceptibility (Iriodin522) does not tend to change its orientation from the substantially horizontal state shown in Figure 6(a) to the vertical state shown in Figure 6(b) because the amount of luster pigments contained in the coated film 5a is large. The difference in the hue angle (h_{ab} difference) is therefore small, as shown in Figure 10. As a result, comparison between a designable medium produced with application of no magnetic field and a designable medium produced with application of a magnetic field did not allow the inspector to perceive a difference in color change.

The measurement results shown in Figure 10 therefore show that when two types of luster pigment are used to manufacture the designable medium 5, it is preferable to manufacture the designable medium 5 with the concentration of the luster pigments ranging from 3.0% to 14.0%. In this case, the h_{ab} difference was 5.0 or higher, and the resultant designable medium 5 provided different color tones when viewed at different angles and the single coated film 5a provided a plurality of color tones.

It is noted in the manufacturing method described above that when paint containing AM-200 (Fe203 (92% to 97%) + Al203 (2% to 7%)) instead of Iriodin522 (mica + Fe203 (54%)) used as the luster pigment having negative (-) anisotropic magnetic susceptibility and a luster pigment having positive (+) anisotropic magnetic susceptibility was produced and the designable media 5 were produced by using the paint, the resultant designable media 5 did not show a difference in color tone between two colors. The reason for this is that the designable media 5 were produced by using only one type of luster pigment.

(Example 2)

### <Exemplary method 2 for manufacturing designable medium 5>

First, two types of luster pigment (Iriodin522 and XirallicT60-24) were added to a no-solvent, low-viscosity curable resin (UV Flexographic ink (manufactured by T&K TOKA Corporation, viscosity: 170 mPa·s)) to produce paint by using an ink agitator (manufactured by KURABO Industries Ltd., model: KK-100).

Iriodin522 was used as the luster pigment 6b having negative (-) anisotropic magnetic susceptibility, and XirallicT60-24 was used as the luster pigment 6a having positive (+) anisotropic magnetic susceptibility. The entire luster pigment containing the luster pigment 6b having negative (-) anisotropic susceptibility and the luster pigment 6a having positive (+) anisotropic susceptibility was set to have a concentration of 10%. With the entire paint (two types of luster pigments + no-solvent, low-viscosity curable resin) being a reference having a value of 1, the proportion of the two luster pigments contained in the paint was derived as the concentration of the two luster pigments.

The paint was then applied onto the substrate (easy-adhesion PET (manufacture by TORAY Industries, Inc., Lumirror U426)) 5b having a thickness of 100 µm by using a wire bar (#20) to produce the coated film 5a on the substrate 5b.

The designable medium 5 was then placed in a magnetic field generator (manufacture by Sumitomo Heavy Industries, Inc., model: HF5-100VT-50HT) installed horizontally, such as that shown in Figure 5, and a magnetic field (lateral magnetic field, horizontal magnetic field) of 0.5 T was applied to the designable medium 5 to orient the two types of luster pigments.

With the magnetic field of 0.5 T applied, the designable medium 5 was irradiated with ultraviolet light so that the coated film 5a was cured. The designable medium 5 was thus produced.

In the manufacturing method described above, the designable medium 5 was produced by changing the mixture ratio between the luster pigment (Iriodin522) 6b having negative (-) anisotropic magnetic susceptibility and the luster pigment (XirallicT60-24) 6a having positive (+) anisotropic magnetic susceptibility in the paint over the range of Iriodin522:XirallicT60-24=1:0.05 to 1:8. The thus produced designable media 5 were visually evaluated in terms of color tone. It is noted that the concentration of the two luster pigments was fixed at 10% in the evaluation.

Further, the difference between a maximum hue angle h_{ab}(corresponding to green) of the designable medium 5 produced with application of no magnetic field in the manufacturing method described above and a minimum hue angle h_{ab} (corresponding to brown) thereof (maximum h*_{ab} difference with no magnetic field) and the difference between a maximum hue angle h_{ab} (corresponding to green) of the designable medium 5 produced with application of a magnetic field in the manufacturing method described above and a minimum hue angle h_{ab} (corresponding to brown) thereof (maximum h*_{ab} difference with no magnetic field) were determined, and the difference between the two differences (h_{ab} difference between the state in presence of magnetic field and the state in absence of magnetic field) was determined. The hue angles were measured with a spectrophotometric colorimetry spectrometer (model: GCMS-3B, manufactured by Murakami Color Research Laboratory).

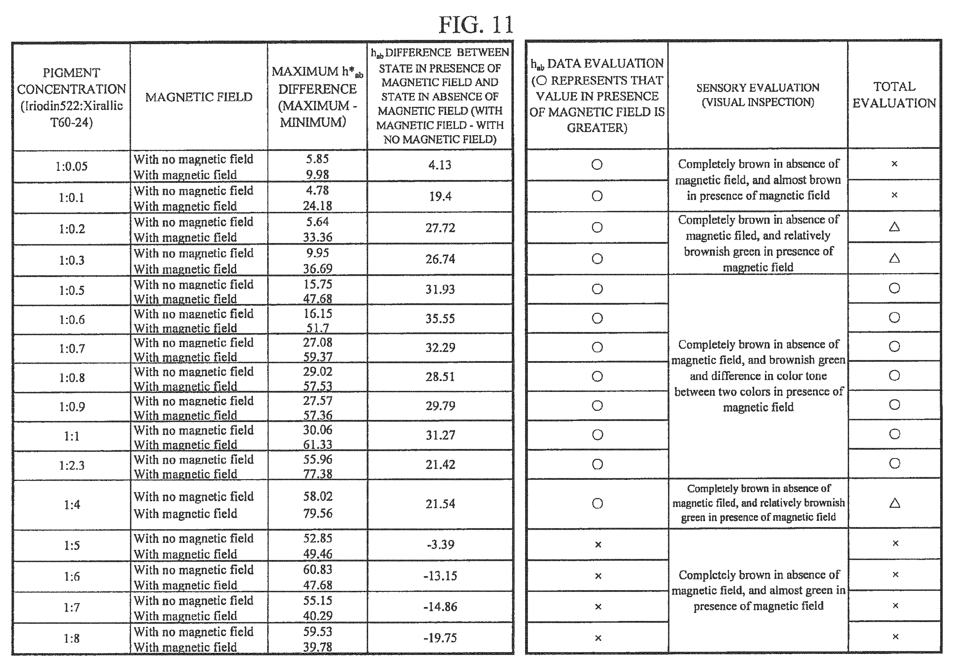

Figure 11 shows results of the visual evaluation (sensory evaluation) of the color tone of the designable media 5 and the h_{ab} difference between the state in the presence of a magnetic field and the state in the absence of a magnetic field.

As clearly indicated by the measurement results shown in Figure 11, when the mixture ratio between the luster pigment (Iriodin522) 6b having negative (-) anisotropic magnetic susceptibility and the luster pigment (XirallicT60-24) 6a having positive (+) anisotropic magnetic susceptibility was within the range of Iriodin522 : XirallicT60-24 = 1:0.05 to 1:0.1, the designable media produced with application of a magnetic field did not show a large difference in color tone between two colors (almost brown) because the luster pigment (Iriodin522) 6b having negative (-) anisotropic magnetic susceptibility was dominant, and comparison between a designable medium produced with application of no magnetic field (brown) and a designable medium produced with application of a magnetic field (almost brown) did not allow the inspector to perceive a difference in color change (×).

When the mixture ratio between the luster pigment (Iriodin522) 6b having negative (-) anisotropic magnetic susceptibility and the luster pigment (XirallicT60-24) 6a having positive (+) anisotropic magnetic susceptibility was within the range of Iriodin522 : XirallicT60-24 = 1:0.2 to 1:0.3, the designable media produced with application of a magnetic field shows a slight difference in color tone between two colors (relatively brownish green) because a slight amount of luster pigment (XirallicT60-24) 6a having positive (+) anisotropic magnetic susceptibility was present against the luster pigment (Iriodin522) 6b having negative (-) anisotropic magnetic susceptibility. As a result, comparison between a designable medium produced with application of no magnetic field (brown) and a designable medium produced with application of a magnetic field (relatively brownish green) allowed the inspector to perceive that the designable medium produced with application of no magnetic field showed no difference in color tone between two colors but the designable medium produced with application of a magnetic field showed a slight difference in color tone between two colors (Δ).

When the mixture ratio between the luster pigment (Iriodin522) 6b having negative (-) anisotropic magnetic susceptibility and the luster pigment (XirallicT60-24) 6a having positive (+) anisotropic magnetic susceptibility was within the range of Iriodin522 : XirallicT60-24 = 1:0.4 to 1:2.3, the designable media produced with application of a magnetic field shows a noticeable difference in color tone between two colors (brownish green) because large amounts of luster pigment (Iriodin522) 6b having negative (-) anisotropic magnetic susceptibility and luster pigment (XirallicT60-24) 6a having positive (+) anisotropic magnetic susceptibility were present. As a result, comparison between a designable medium produced with application of no magnetic field (brown) and a designable medium produced with application of a magnetic field (brownish green) allowed the inspector to perceive that the designable medium produced with application of no magnetic field showed no difference in color tone between two colors but the designable medium produced with application of a magnetic field showed a difference in color tone between two colors (○).

When the mixture ratio between the luster pigment (Iriodin522) 6b having negative (-) anisotropic magnetic susceptibility and the luster pigment (XirallicT60-24) 6a having positive (+) anisotropic magnetic susceptibility was within the range of Iriodin522 : XirallicT60-24 = 1:1.4, the designable media produced with application of a magnetic field shows a slight difference in color tone between two colors (relatively brownish green) because a slight amount of luster pigment (Iriodin522) 6b having negative (-) anisotropic magnetic susceptibility was present against the luster pigment (XirallicT60-24) 6a having positive (+) anisotropic magnetic susceptibility. As a result, comparison between a designable medium produced with application of no magnetic field (green) and a designable medium produced with application of a magnetic field (relatively brownish green) allowed the inspector to perceive that the designable medium produced with application of no magnetic field showed no difference in color tone between two colors but the designable medium produced with application of a magnetic field showed a slight difference in color tone between two colors (Δ).

When the mixture ratio between the luster pigment (Iriodin522) 6b having negative (-) anisotropic magnetic susceptibility and the luster pigment (XirallicT60-24) 6a having positive (+) anisotropic magnetic susceptibility was within the range of Iriodin522 : XirallicT60-24 = 1:5 to 1:8, the designable media produced with application of a magnetic field did not show a large difference in color tone between two colors (almost green) because the luster pigment (XirallicT60-24) 6a having positive (+) anisotropic magnetic susceptibility was dominant, and comparison between a designable medium produced with application of no magnetic field (green) and a designable medium produced with application of a magnetic field (almost green) did not allow the inspector to perceive a difference in color change (×).

The measurement results shown in Figure 11 therefore show that when two types of luster pigment are used to manufacture the designable medium 5, the mixture ratio between the luster pigment (Iriodin522) 6a having negative (-) anisotropic magnetic susceptibility and the luster pigment (XirallicT60-24) 6a having positive (+) anisotropic magnetic susceptibility is preferably within the range of Iriodin522 : XirallicT60-24 = 1:02 to 1:4, more preferably within the range of Iriodin522 : XirallicT60-24 = 1:05 to 1:2.3. In this case, each of the resultant designable media 5 provided different color tones when viewed at different angles, and the single coated film 5a provided a plurality of color tones.

The embodiments described above are preferred embodiments of the present invention, and the scope of the present invention is not limited only to the embodiments described above. Those skilled in the art can modify and replace the embodiments described above and make a variety of changes thereto to the extent that the modification, replacement, and changes do not depart from the substance of the present invention.

For example, in Examples described above, Iriodin522 was used as the luster pigment 6b having negative (-) anisotropic magnetic susceptibility, and XirallicT60-24 was used as the luster pigment 6a having positive (+) anisotropic magnetic susceptibility. The designable medium 5 was then placed in a magnetic field generator installed horizontally, such as that shown in Figure 5, and a magnetic field (lateral magnetic field, horizontal magnetic field) of 0.5 T was applied to the designable medium 5 to orient the two types of luster pigment. In this case, the measurement results shown in Figures 10 and 11 were obtained. Even when the material used as the luster pigment 6b having negative (-) anisotropic magnetic susceptibility and the material used as the luster pigment 6a having positive (+) anisotropic magnetic susceptibility are changed as appropriate, values within a range substantially the same as the measurement results shown in Figures 10 and 11 are optimum values although there will be differences in measurement results to some extent. Therefore, when the coated film 5a in which at least two types of luster pigment to be oriented in different directions in a magnetic field (luster pigment 6b having negative (-) anisotropic magnetic susceptibility and luster pigment 6a having positive (+) anisotropic magnetic susceptibility) are diffused in a resin is formed on the substrate 5b, and a magnetic field (horizontal magnetic field or vertical magnetic field) is applied to orient the two luster pigments 6b and 6a, the single coated film 5a can provide a plurality of color tones.

This application is based upon and claims the benefit of priority from Japanese patent application No. 2011-118928, filed on May 27, 2011, the disclosure of which is incorporated herein its entirety by reference.

### DESCRIPTION OF REFERENCE NUMERALS

- 5: Designable medium
- 5a: Coated film
- 5b: Substrate
- 6a, 6b: Luster pigment
- 1, 2: Magnetized yoke
- 3a to 3m: Magnetic flux
- 4: Magnetic member
- 4a: Ferromagnetic material area
- 4b: Non-ferromagnetic material area
- 40: Magnetic member
- 40a: Plate-shaped member
- 40b: Non-ferromagnetic material

## Claims

1. A method for manufacturing a designable medium **characterized in that** the method comprises:
an application step of applying coat in which at least two types of luster pigment to be oriented in different directions in a magnetic field are diffused in a resin to a substrate to form a coated film;
an orientation step of applying a magnetic field to a medium in which the coated film is formed on the substrate to orient the luster pigments contained in the coated film; and
a cure step of curing the coated film.

2. The method for manufacturing a designable medium according to claim 1, **characterized in that**
the application step is a step of applying coat in which the following at least two types of luster pigment are diffused in the resin to the substrate: a first luster pigment to be oriented in a magnetic field in a direction substantially perpendicular to magnetic fluxes; and a second luster pigment to be oriented in the magnetic field in a direction substantially parallel to the magnetic fluxes.

3. The method for manufacturing a designable medium according to claim 1 or 2, **characterized in that** the cure step is a step of curing the coated film with the magnetic field applied.

4. The method for manufacturing a designable medium according to any one of claims 1 to 3, **characterized in that** the orientation step is a step of applying a magnetic field to the medium with a magnetic member made of a ferromagnetic material or a paint containing a ferromagnetic material adjacent to the substrate to orient the luster pigments.

5. A designable medium comprising: a substrate; and a coated film in which at least two types of luster pigment to be oriented in different directions in a magnetic field are diffused in a resin, the substrate and the coated film being layered on each other, the designable medium **characterized in that**
the coated film includes the following at least two types of luster pigment: a luster pigment oriented in substantially the same direction as the direction in which the coated film is layered on the substrate; and a luster pigment oriented in a direction substantially perpendicular to the layered direction.

6. The designable medium according to claim 5, **characterized in that** the at least two types of luster pigment are a luster pigment to be oriented in a magnetic field in a direction substantially perpendicular to magnetic fluxes and a luster pigment to be oriented in the magnetic field in a direction substantially parallel to the magnetic fluxes.
